**Europäisches Patentamt**

**European Patent Office**

**Office européen des brevets**

(11) Veröffentlichungsnummer: **0 098 237**
**B1**

(12) # EUROPÄISCHE PATENTSCHRIFT

(45) Veröffentlichungstag der Patentschrift:
05.11.86

(51) Int. Cl.⁴: **F 16 L 21/06**

(21) Anmeldenummer: **83730062.3**

(22) Anmeldetag: **29.06.83**

(54) **Lösbare Verbindung für glatte Rohrenden.**

(30) Priorität: **29.06.82 DE 3224602**

(43) Veröffentlichungstag der Anmeldung:
**11.01.84 Patentblatt 84/2**

(45) Bekanntmachung des Hinweises auf die Patenterteilung:
**05.11.86 Patentblatt 86/45**

(84) Benannte Vertragsstaaten:
**FR IT**

(56) Entgegenhaltungen:
**DE-A-2 800 060**
**DE-B-2 906 728**
**DE-U-1 939 411**
**US-A-3 423 111**
**US-A-4 147 384**

(73) Patentinhaber: **MANNESMANN Aktiengesellschaft,
Mannesmannufer 2, D-4000 Düsseldorf 1 (DE)**

(72) Erfinder: **Janssen, Manfred, Dr.- Ing., Moerser
Strasse 398, D-4150 Krefeld (DE)**
Erfinder: **Schmidt, Volker, Dr.- Ing.,
Michaelstrasse 8, D-4330 Mülheim (DE)**
Erfinder: **Bachmann, Theodor, Haus
Gravenerstrasse 39, D-4018 Langenfeld (DE)**

(74) Vertreter: **Meissner, Peter E., Dipl.- Ing.,
Herbertstrasse 22, D-1000 Berlin 33 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 098 237 B1

## Beschreibung

Die Erfindung betrifft eine lösbare Verbindung für glatte Rohrenden gemäß dem Oberbegriff des Patentanspruchs 1.

Es ist bekannt, elastische Schläuche durch Schlauchklemmen zu verbinden, die Klemmringe mit ohrenförmigen Klemmösen aufweisen. Mittels einer Zange werden die Klemmösen zusammengedrückt, so daß eine feste Verbindung der Schlauchenden entsteht. Dabei spielt die Elastizität des Schlauches selbst eine besondere Rolle, weil hierdurch eine Gegenkraft erzeugt wird (DE-C-869 583, CH-A-442 902). Andererseits ist es auch bekannt, glatte Rohrenden mittels einer geschlitzten Muffe zu verbinden, wobei die 5 Anspressung durch Klemmringe bewirkt wird. Diese Klemmringe werden durch Schrauben gespannt, und es entsteht über den gesamten Umfang der Klemmringe eine Anspressung. Im Bereich der Klemmschrauben müssen die Enden der Klemmringe einen gewissen Abstand aufweisen, um ein Spannen überhaupt zu ermöglichen (DE-A-2 800 060, DE-U-19 36 774, DE-U-18 62 269).

Eine Klemmschelle zum Verbinden von ineinandergesteckten Rohren, von denen das aufnehmende Rohr erweitert und in Längsrichtung geschlitzt ist, ist durch die DE-B-29 06 728 beschrieben. Es handelt sich dabei um eine relativ aufwendige Konstruktion.

Für Rohre, die beim Einsatz warm werden, reicht eine derartige Verbindung nicht immer aus, d.h. die Halte- und Dichtkraft kann nachlassen. Nach längerem Gebrauch und bei starken Verschmutzungen lassen sich die Schrauben nicht mehr nachstellen.

Aufgabe der Erfindung ist es daher, eine einfache lösbare Verbindung für glatte Rohrenden gemäß dem Oberbegriff des Patentanspruches 1 zu schaffen, die auch bei erwärmten Rohren eine ausreichende Halte- und Dichtkraft bewirkt.

Gelöst wird diese Aufgabe erfindungsgemäß mit den Merkmalen im Kennzeichen des Patentanspruchs 1.

Der Vorteil der erfindungsgemäßen lösbaren Verbindung für glatte Rohrenden liegt darin, daß die Anpreßkraft der Klemmringe so hoch gewählt werden kann, daß sowohl die Muffe als auch der entsprechende Teil des Rohres leicht verformt wird, so daß eine dichte und haltbare Verbindung entsteht. Als weiterer Vorteil ist ein Ausgleich vorhandener Rohrtoleranzen möglich.

In den beigefügten Zeichnungen ist eine mögliche Ausführungsform einer erfindungsgemäßen lösbaren Verbindung für glatte Rohrenden schematisch dargestellt.

Es zeigen:

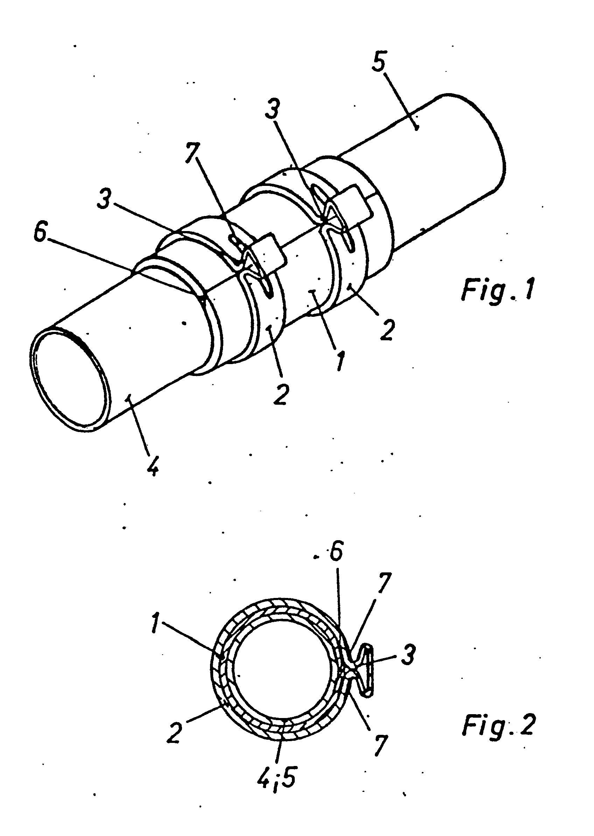

Fig. 1 eine Rohrverbindung in perspektivischer Darstellung

Fig. 2 einen Querschnitt durch Fig. 1

Fig. 3 eine Rohrverbindung nach Fig. 1 mit veränderter Schlitzform

Fig. 4 eine Rohrmuffe mit Teilschlitzen

Wie aus den Zeichnungen hervorgeht, wird über die Rohrenden 4 + 5, die nicht unbedingt aneinderstoßen müssen, eine Rohrmuffe 1 geschoben, die mit einem glatten oder keilförmig verlaufenden Schlitz 6 versehen ist. Über die Muffe 1 sind mindestens zwei Klemmringe 2 geschoben, die mit ohrförmigen Klemmösen 3 ausgestattet sind.

Beim Verklemmen der Klemmringe 2 sind Hilfe einer geeigneten Klemmzange Einbuchtungen 7 in Höhe der Klemmöse 3 in Muffe und Rohrenden eingebracht worden. Die so verklemmte Verbindung erzielt eine hohe Dicht- und Haltekraft und ist mit Hilfe einer kneifzangenartigen Vorrichtung leicht durch Abkneifen der Klemmösen zu öffnen.

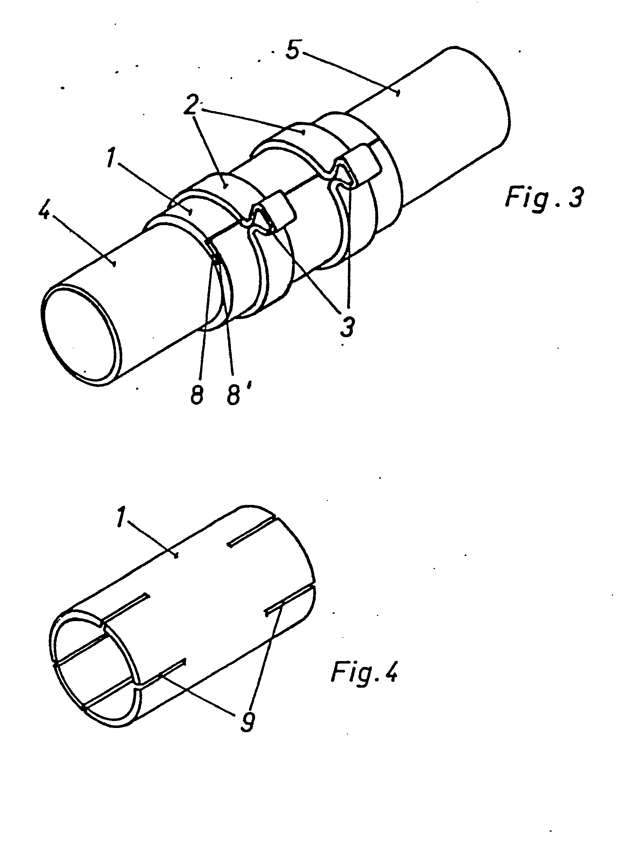

In Figur 3 ist eine aus Band gefertigte Rohrmuffe 1 dargestellt, wobei die Bandenden mit Absätzen 8 bzw. 8' versehen sind, die sich nach Biegen der Bänder zum Schlitzrohr übereinanderlegen und sich in Umfangsrichtung übereinanderschieben.

Figur 4 zeigt die Abänderung der Rohrmuffe 1 mit Teilschlitzen 9.

## Patentansprüche

1. Lösbare Verbindung für glatte Rohrenden, bestehend aus einer glatten rohrförmigen Muffe und ringförmigen Klemmelementen, wobei die Rohrmuffe mit einem Längsschlitz (16) versehen ist und zwei Klemmringe (2) die Rohrmuffe umgeben, dadurch gekennzeichnet, daß jeder Klemmring (2) mit an sich bekannten U-förmigen ohrenförmigen Klemmösen (3) ausgestattet ist, deren Schenkel unter Bildung von in Umfangsrichtung verlaufenden Einbuchtungen (7) in der Rohrmuffe (1) und den Rohrenden (4, 5) zumindest im an die Klemmösen (3) angrenzenden Bereich aufgepreßt sind.

2. Lösbare Verbindung nach Anspruch 1, dadurch gekennzeichnet, daß die Bildung der Einbuchtungen (7) mit Hilfe einer geeigneten Klemmzange erfolgt.

## Claims

1. A detachable connection for smooth tube ends, comprised of a smooth tubular sleeve and annular clamping elements, said sleeve being provided with a longitudinal slot and two clamping rings (2) surrounding said sleeve, characterized in that the clamping ring (2) is provided with customary earshaped clamping lugs (3) of tubular configuration, the legs of which being pressed on by forming indentations (7) extending in circumferential direction in said tubular sleeve (1) and the tube ends (4,5) at least in the range adjacent to the clamping lugs.

2. A detachable connection according to claim 1, characterized in that the formation of indentations (7) is carried out with the aid of a suitable clamping claw.

## Revendications

1 - Raccord démontable pour extrémités de tuyau lisses, comprenant un manchon lisse tubulaire et des éléments de serrage annulaires, le manchon tubulaire étant muni d'une fente longitudinale (6) et deux anneaux de serrage (2) entourant le manchon tubulaire, caractérisé en ce que chaque anneau de serrage (2) est muni d'oeils de serrage (3) en forme de U connus en soi, dont les branches sont engagees par pression par formation d'échancrures (7) s'étendant en direction périphérique dans le manchon tubulaire (1) et les extrémités de tuyau (4, 5) au moins dans la zone adjacente aux oeils de serrage (3).

2 - Raccord démontable selon la revendication 1, caractérisé en ce que les échancrures (7) sont formées à l'aide d'une pince de serrage appropriée.

Fig.1

Fig.2

Fig. 3

Fig. 4